# EUROPEAN PATENT SPECIFICATION

(11) **EP 1 698 503 B1**
(45) Date of publication and mention of the grant of the patent: **22.10.2008**
(21) Application number: 05381009.9
(22) Date of filing: 01.03.2005
(51) Int. Cl.: B60J 5/04

(54) **Structural supporting module for vehicle doors**
Strukturmodulträger für Fahrzeugtüren
Module de support structurelle pour portes de véhicule

(43) Date of publication of application: 06.09.2006
(73) Proprietor: GRUPO ANTOLIN-INGENIERIA, S.A., 09007 Burgos (ES)
(72) Inventor: Bermejo Urieta, Alberto, Av.Reyes Catolicos 51, 3B 09005 Burgos (ES); Moreno Aznar, Javier Francisco, 09005 Burgos (ES)
(74) Representative: Esteban Perez-Serrano, Maria Isabel

(56) References cited:
- EP-A- 1 129 874
- WO-A-00/63039
- DE-A1- 19 944 965

## Description

### OBJECT OF THE INVENTION

The present invention relates to a structural supporting module for motor vehicle doors meant to simplify the mounting tasks of the various functional elements which it incorporates and are conventional in said doors.

This module is characterised by a structural panel with supporting capacity to allow mounting the various door elements on it and capacity to absorb the loads transmitted by the various functional elements after they are in their operative position on the door.

The present invention is characterised by a special configuration of the window lifter mechanism that integrates various components of the window lifter mechanism in the panel itself. It characterises the fact that the window lifter rails are independent of the cable redirecting means of the window lifter mechanism. In this way, the rails do not support the loads transmitted by said redirecting means, acting only to guide the sliders.

The module can also establish a watertight seal in the door on which it is mounted, separating the dry area from the wet area.

The aforementioned module facilitates the tasks of mounting the various elements incorporated in it, reduces the number of operations required in the mounting process and reduces the number of elements to be mounted, lowering the cost of the final product.

### BACKGROUND OF THE INVENTION

Supporting modules are known in the state of the art intended to secure the various functional elements commonly provided on the motor vehicle doors on which they are installed.

These supports may or may not be structural; moreover, the support may be the trimming panel of the door itself or a panel placed between the trimming panel and the door box plate. In some cases, these supports also carry out a water-tight seal between the wet area and the dry area or partial seals between said areas.

One of the functional elements mounted on the door is the window lifter mechanism. This mechanism usually comprises rails, a geared motor, transmission means and a drum lid among other components. The rail is the structural element that supports the redirecting means.

Known in the state of the art are several solutions related to mounting the window lifter mechanism in modular supports, as in the case of the patents cited below.

US Patent 2003/0097798 relates to a plastic structural supporting module for vehicle doors which on which are mounted several functional elements of the door. This door module has certain recesses in which the window lifter rails are attached. This solution uses conventional window lifter rails and the cable diverting means (pulleys) are not independent of the rails. The efforts are directly supported by the rail, not by the supporting module.

Other examples are patents JP200200287 and WO0120114; in both cases the window lifter mechanism rails are fully integrated in the supporting module to constitute a single part. In these examples the panel and the rails are manufactured as a single part. One of the drawbacks of this solution are that it requires small tolerances when manufacturing the cavities corresponding to the rail, as well as a lower durability of the module as it deteriorates more quickly.

it is also known from the state of the art the door module disclosed in WO 0063039 wherein is described a carrier plate assembly which among other elements comprises integrally molded cable guides and pulleys which receive window regulator cables. This invention does not overcome the afore mentioned drawbacks derived from the fact of having in the same piece the rails and cable redirecting means.

The document EP 1 129 874 A2 discloses the preamble of claim 1.

The present invention overcomes the drawbacks discussed in the foregoing paragraphs, facilitating the mounting tasks and reducing the cost of the final product. Various elements of the window lifter mechanism are integrated in the panel, where the cable redirecting means are made independent of the rail(s) so that the rail(s) is(are) easy to manufacture and mount. The rail(s) does(do) not support the loads produced in the cable redirecting means; instead, the loads are transmitted directly to the panel, which has a structural nature as the redirecting means made independent of the rails are attached to the panel. As the rails do not play a structural role the materials used to manufacture it are less costly. In addition, the supporting module can establish a watertight seal in the door, separating the dry area from the wet area.

### DESCRIPTION OF THE INVENTION

The present invention relates to a structural supporting module for vehicle doors that incorporates the functional elements usually provided on motor vehicle doors.

This module consists of a structural panel which, in addition to a supporting function, establishes a watertight seal in the door to separate the dry area from the wet area. This seal is provided by a peripheral gasket and several lids that cover the corresponding orifices required to mount or regulate the various elements incorporated in the door. Given the structural nature of the panel, it is able to support the loads resulting from the functional elements it bears.

Supporting modules typically carry various functional elements premounted on them, which require a final operation for their final positioning on the door. In the module of the present invention some of these components are integrated permanently on the panel, becoming part of it, reducing the mounting operations as will be described below.

One of the functional elements supported by the module is the window lifter mechanism. The window lifter mechanism may consist of one or two rails in addition to the remaining elements of the mechanism, such as cables, cable redirecting means, sliders, geared motor, stops, etc.

The present invention is mainly characterised by a special configuration of the window lifter mechanism and by the integration of some of its components in the panel.

In this manner, the rails are made independent of the cable redirecting means that are directly attached to the panel.

The rail is attached to the panel also in a very simple manner. For this purpose, the panel is provided with protrusions to which the rail is attached. The definitive attachment can be performed in different ways, all of them very simple, such as clipping, screwing or riveting.

Other elements of the window lifter mechanism that can be integrated in the panel are: end of stroke stops, stops to retain the cable in cable redirecting means, or sheathed cable directing elements. The latter are typically used in "Bowden" type window lifters, i.e. those in which the cable path is not straight and cable protection sheaths are required to maintain the cable tension.

All of this further simplifies the mounting process of the window lifter mechanism, reducing the cost of the final product.

The panel can integrate other elements, such as elements for supporting and guiding the cables.

In addition, the panel can integrate elements that allow to attach a lock support to the module.

Likewise, it is possible to partially integrate a drum case on the structural panel to eliminate the use of a conventional case. This known solution establishes a configuration that simplifies the mounting and reduces costs with respect to a conventional configuration as the reference is partially integrated in the panel. The integration of the case in the panel is described in greater detail in the discussion of one of the preferred embodiments for the present invention.

Thus, the supporting module referred to in the present document in addition to being structural performs supporting functions for several elements of the window lifter assembly and can also provide a watertight seal. Its configuration and design facilitate the mounting tasks of the various functional elements on the supporting panel, particularly that of the window lifter mechanism, as the rails are made independent of the cable redirecting means which are integrated in the panel, to which the loads are directly transmitted. Other elements of the window lifter mechanism are also integrated in the panel, thereby obtaining a window lifter rail with a simple configuration and that is easy to mount, as well as inexpensive as it can be manufactured with a lower thickness and from materials that do not require structural demands and are therefore less costly.

### DESCRIPTION OF THE DRAWINGS

The present descriptive memory is accompanied by a set of drawings that illustrate the preferred example and do not limit the invention in any way.

Figure 1 is a perspective view of the module without the rails attached to it.

Figure 2 is an enlarged view of one of the cable diverting elements, an end of stroke stop, a stop to retain the cable in the redirecting means and a guide for directing the sheathed or "Bowden" cable integrated in the panel.

Figure 3 is a perspective view of one of the rails with tabs for attachment to protuberances of the panel.

Figure 4 is a view from the inside of the door box plate which allows seeing the supporting module through one of the mounting openings, with the window lifter mechanism already in its operative position.

Figures 5 is an enlarged cross-section of the attachment of the cable redirecting means to the panel by means of a turret-shaped protrusion that is integrated in the panel.

Figure 6 shows a perspective view of an example of embodiment of the drum case integrated in the panel with the sealing lid and the cable passage window.

Figure 7 is a cross section of the drum case with the lid, the drum, the watertight gasket and the geared motor.

### PREFERRED EMBODIMENT OF THE INVENTION

The present invention relates to a structural supporting module for vehicle doors, meant to facilitate the mounting tasks of the various functional elements which it carries, as well as the possibility of optionally establishing a watertight seal in the vehicle door where it is integrated, separating the dry area from the wet area. This module reduces the costs of the final product, particularly by using window lifter rails (2) with a very simple configuration and made of inexpensive materials that do not require structural capacities, as the rails (2) are independent of the cable redirecting means (4) that are attached directly to the module.

This module consists of a structural panel (1) which supports various functional elements common in motor vehicle doors where it is installed.

The object of the present invention is to reduce the cost of the final product and facilitate the mounting tasks of the various functional elements incorporated in the module, particularly the window lifter mechanism by integrating some of its elements in the panel (1) itself.

A cable window lifter assembly is essentially comprised of one or two rails (2), cables, geared motor (10), sliders (3), cable redirecting means (4), drum (8) and other elements such as end of stroke stops (1.2), stops (1.3) for retaining the cable in the redirecting means (4) and guides (1.4) for directing the sheathed cables (these elements are typically used in "Bowden" type window lifters, i.e. those in which the cable path is not straight and the cables require a protection sheath), placed at the outlet of the redirecting means (4) or of the drum (8), this is at the outlet of the elements in which the cable is redirected.

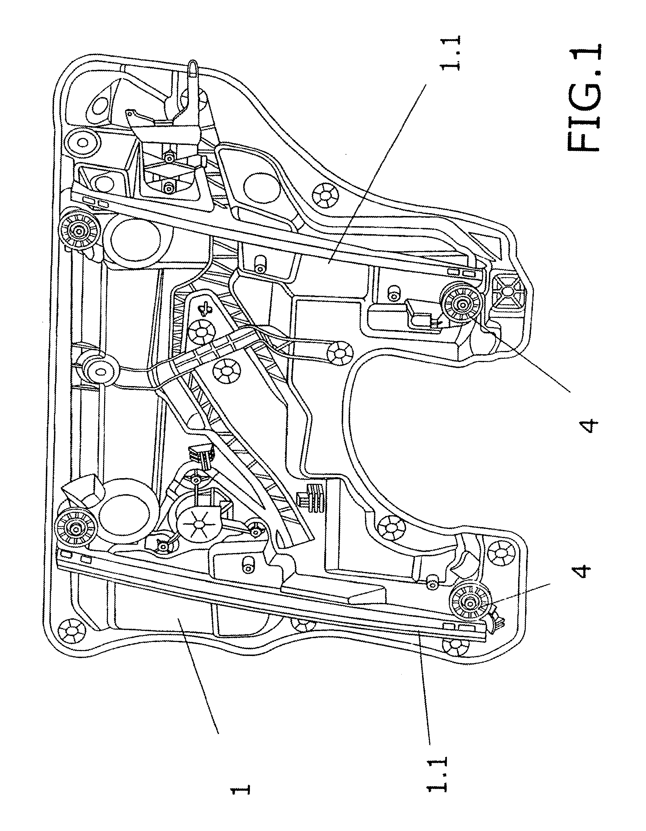

As can be seen in figures 1, 2 and 4, the guide rails (2) are independent of the cable redirecting means (4), unlike with conventional window lifter mechanisms in which the rail (2) incorporates means for attaching the cable redirecting means (4). These elements (2, 4) are typically not independent, the rail (2) supporting the loads transmitted by the redirecting means (4).

With the present invention, as the redirecting means (4) are fully independent, the rails (2) do not support any load and act only to guide the sliders (3), for this reason the rails (2) adopt a very simple configuration and can be manufactured with small thickness and of a material that does not require structural capacities and is inexpensive. Here the redirecting means (4) are attached to the panel (1) independently of the rails (2) and the loads resulting from the redirecting means (4) are absorbed by the panel (1), which as indicated above is a structural element (1).

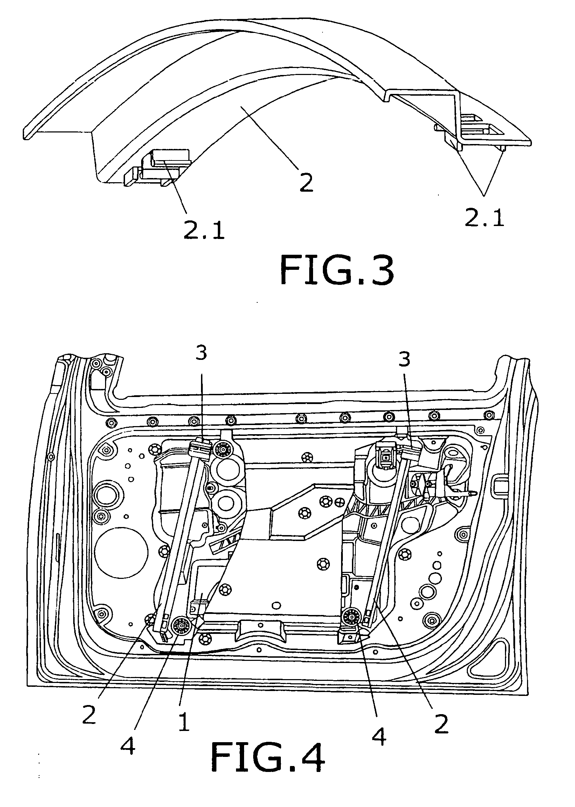

In a preferred embodiment of the invention the rails (2) are longitudinal profiles with a basically constant cross section, as shown in figure 3. In this example the rails (2) are attached to the panel (1) by the tabs (2.1) provided on both ends of the rail (2) and which are inserted in the openings (1.1.1) provided in the panel (1) by stapling.

In turn, the panel (1) has longitudinal protrusions (1.1), in this case as shown in figure 1, in which he rails (2) are attached by the tabs (2.1) which staple onto the corresponding openings (1.1.1) made in the longitudinal protrusions (1.1).

In another embodiment, not shown, the attachment of the rails (2) to the protrusions (1.1) can be by screwing or riveting, for example.

Similarly, the protrusions (1.1) do not have to cover the entire length of the rail (2), provided they allow supporting and anchoring at the attachment points of the rail (2). Said attachment points do not have to be the ends of the rail (2).

This simple configuration of the rails (2) is made possible because the rails (2) are made independent of the cable redirecting means (4) and the other components of the window lifter mechanism are integrated in the panel (1), such as the end of stroke stop (1.2), the stop (1.3) that retains the cable in the redirecting means or the sheathed cable directing guide (1.4).

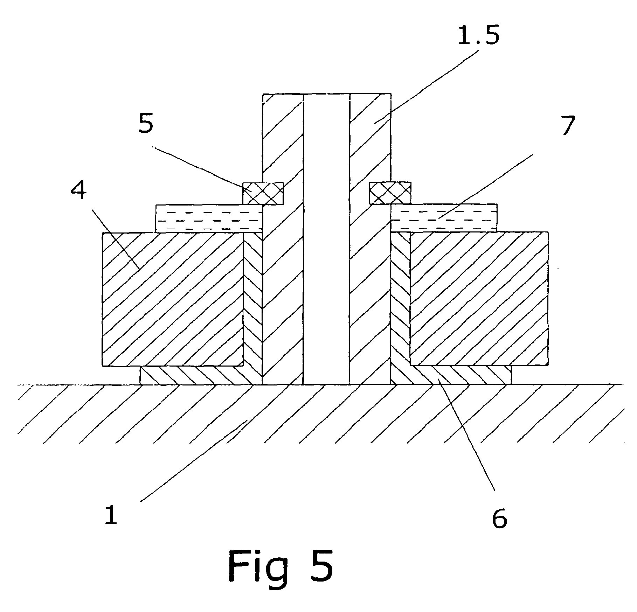

In a preferred embodiment of the invention, the cable redirecting means (4) are attached to the panel (1) at turret-shaped protrusions (1.5) that are integrated in the panel (1), as shown in figures 1, 2, 4 and in the enlargement shown in figure 5. Said figure 5 shows how in this embodiment the attachment of the redirecting means (4) is performed by an inverted-T shaped bushing (6) on which rests the redirecting mean (4) and is placed between the latter element (4) and the protrusion (1.5), which in addition protects the protrusion (1.5) and the panel (1) against wear, reduces the friction between the protrusion (1.5) and the redirecting means (4) and the friction between the panel (1) and the redirecting means (4), as well as adding stiffness. A washer (7) and a circlip (5) complete in this case the attachment of the redirecting means (4) to the panel (1).

Other methods, not shown, for attaching the redirecting means (4) to the panel (1) are possible. In this sense could be used-, by way of example, rivets or an addition external part similar to the turret (1.5) represented in figure 5 which connects the panel (1) to the cable redirecting means (4).

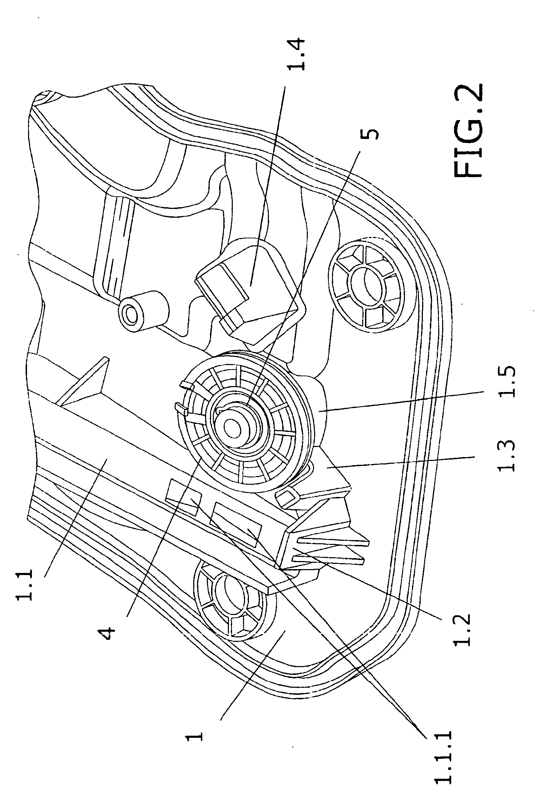

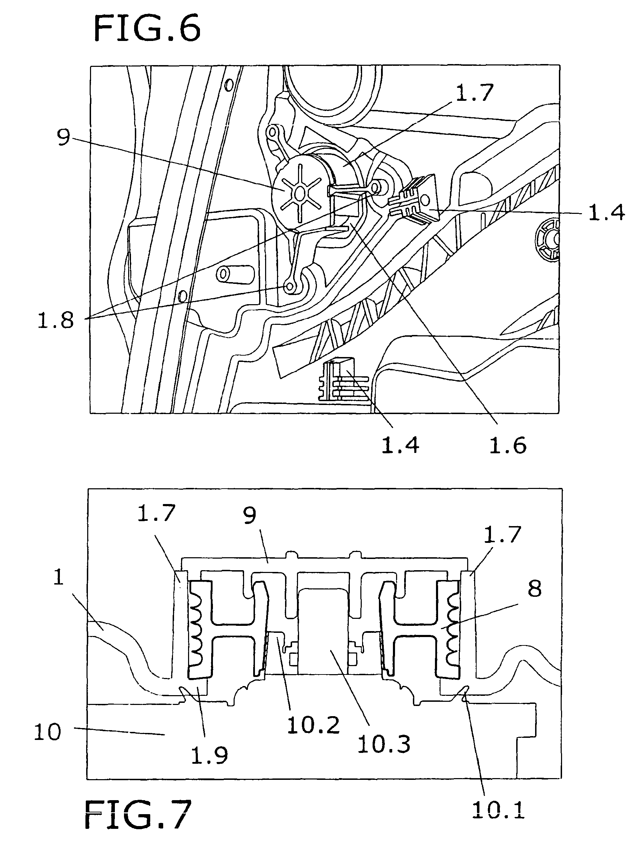

This panel (1) integrates other elements of the window lifter mechanism. Thus, figure 2 shows the end of stroke stop (1.2), the stop (1.3) that retains the cable in the redirecting means (4) and the sheathed cable directing guides (1.4) placed at the outlet of the cable redirecting means (4) and the drum (8), as is also shown in figure 6.

The end of stroke stops (1.2) are protrusions that emerge from the panel (1) in correspondence with the ends of each rail, where they are needed. Their function is to stop the slider (3) when it travels along the corresponding rail (2) in its upward and downward movement. Figure 2 shows an enlarged view of this element (1.2).

Also shown in figure 2 is the stop (1.3) that retains the cable in the cable redirecting means (4).

Other elements integrated in the panel (1) is the sheathed cable directing guide (1.4), in the case that a "Bowden" type window lifter is used. Said sheathed cable directing guides (1.4) guide the cable with its corresponding sheath to the outlet of the elements where it is redirected (redirecting means (4), drum (8)) in "Bowden" type window lifters (in which the cable path is not straight), so that at the entry in said elements (which corresponds to the exit of the elements where the cable is redirected) the cable enters without a sheath and exits sheathed.

In the example shown in figures 1, 2 and 4 a window lifter mechanism with two rails (2) has been represented, although it is equally possible to represent a window lifter mechanism with a single rail (2) without loss of generality of the invention.

It is also possible to integrate a drum case that also facilitates mounting tasks and reduces the final cost of the supporting module. Figures 6 and 7 show an example in which the drum case (1.7) is partially integrated in the structural panel (1) and therefore is configured by injection when the panel (1) is manufactured. This allows eliminating the use of a conventional case and establishes a configuration that simplifies mounting.

The drum case (1.7) is also configured on the panel (1) by way of a protrusion towards the inside of the door box, toward the wet area, the cable winding drum (8) placed inside said protrusion (1.7). The protrusion (1.7) consists of a wall projected on the main plane of the essentially circular panel (1). As can also be seen in the section represented in figure 7, the protrusion (1.7) is hollow or open on both sides. The drum (8) can be accessed from both sides of the panel, although a seat (1.9) prevents the drum (8) from passing into the area of the panel (1).

From the walls of the case (1.7) may emerge reinforcement ribs that reach turrets (1.8) on which only the motor (10) is attached, as shown in figure 6. This union is effected at the opposite side.

After the winding drum (8) has been mounted, the cavity that houses it constituted by the protrusion (1.7) that emerges from the panel (1) is closed by a lid (9) attached by clipping.

The cables, not shown, leave the case (1.7) through a window (1.6) provided with cable directing guides (1.4), as in this case it is a "Bowden" window lifter. Between the panel (1), almost coinciding in projection with the walls, and the motor (10) is incorporated a watertight gasket (10.1) that separates the dry area from the wet area. In this way, after the geared motor (10) is attached to the panel (1) the gasket (10.1) is trapped between the panel (1) and the case of the geared motor (10) to establish a closed line about the motor shaft (10.3) and the motor geared wheel (10.2) that prevents moisture from entering the dry area.

Said watertight gasket (10.1) can be located in the geared motor (10) or in the panel (1), for example.

Lastly, it must be remarked that the module also provides a watertight seal separating the dry area from the wet area. To do so, the panel (1) has a peripheral gasket and lids that cover the various openings required to assemble and regulate the different elements supported by the module on the door.

The essence of this invention is not affected by variations in the materials, size, shape or arrangement of the component elements, described in a non-limiting manner such that an expert in the field may reproduce it.

## Claims

1. Structural supporting module for vehicle doors configured by a structural panel (1) with integrated protrusions for attaching the rails (2) of a window lifter mechanism which it carries, **characterised in that** it is provided at least with one rail (2) independent of cable redirecting means (4) disposed at the ends of the rail (2) where the cable redirecting means (4) are attached to the panel (1) and the rail (2) is attached to the panel (1) by the protrusions integrated in said panel (1).

2. Structural supporting module for vehicle doors according to claim 1, **characterised in that** the panel (1) integrates end of stroke stops (1.2) that emerge from the bottom of the rails (2).

3. Structural supporting module for vehicle doors according to claim 1, **characterised in that** the panel (1) integrates at least one stop (1.3) that retains the cable in the cable redirecting means (4).

4. Structural supporting module for vehicle doors according to claim 1, **characterised in that** the panel (1) integrates at least one guide (1.4) for directing a sheathed cable at the outlet of the elements where the cable is redirected.

5. Structural supporting module for vehicle doors according to claim 1, **characterised in that** the protrusions (1.1) integrated in the panel (1) to attach the rails (2) are longitudinal.

6. Structural supporting module for vehicle doors according to claim 1, **characterised in that** the protrusions (1.1) integrated in the panel (1) to attach the rails (2) are only prolonged at the attachment areas for the rail (2).

7. Structural supporting module for vehicle doors according to claim 1, **characterised in that** the rails (2) have a constant cross section.

8. Structural supporting module for vehicle doors according to claim 1, **characterised in that** the attachment of the rails (2) to the panel (1) can be by clipping, screwing or riveting.

9. Structural supporting module for vehicle doors according to claim 1, **characterised in that** the cable redirecting means (4) are attached to the panel (1) at turret-shaped protrusions (1.5) integrated in the panel (1).

10. Structural supporting module for vehicle doors according to claim 1, **characterised in that** the cable redirecting means (4) are attached to the panel (1) by a turret-shaped part external to the panel (1) and attached to said panel (1).

11. Structural supporting module for vehicle doors according to claim 1, **characterised in that** the panel (1) integrates elements for attaching a lock support.

12. Structural supporting module for vehicle doors according to claim 1, **characterised in that** the panel (1) itself incorporates integrated in it the housing of the cable winding drum (8) for raising and lowering the slider (3) of the window lifter, configured by walls (1.7) that emerge from the panel (1), the case cavity being open on its two bases, wherein the base facing the wet or inner area of the door box is covered by a lid (9).

13. Structural supporting module for vehicle doors according to claim 12, **characterised in that** the panel (1) is provided on its base that is open towards the wet area with a peripheral seat (1.9) of the winding drum (8).

14. Structural supporting module for vehicle doors according to claim 12, **characterised in that** the walls (1.7) that emerge from the panel (1) have a window (1.6) for entry and outlet of the cables.

15. Structural supporting module for vehicle doors according to claim 14, **characterised in that** the cable entry and outlet window (1.6) consists of a slit that is closed by a clipped lid (9).

16. Structural supporting module for vehicle doors according to claim 12, **characterised in that** the geared motor (10) is provided with a watertight gasket (10.1) that is trapped against the panel (1) about the open cavity of the case on the side of the wet area.

17. Structural supporting module for vehicle doors according to claim 12, **characterised in that** the panel is provided with a watertight gasket (10.1) that is trapped between the geared motor and the panel (1) about the open cavity of the case on the side of the wet area.

18. Structural supporting module for vehicle doors according to claim 12, **characterised in that** the panel (1) has turrets (1.8) for anchoring the geared motor (10) to the panel (1) on the dry area.

## Patentansprüche

1. Strukturelles Trägermodul für Fahrzeugtüren, das von einem strukturellen Paneel (1) mit integrierten Vorsprüngen für die Befestigung von Schienen (2) eines Fensterhebermechanismus konfiguriert ist, der dieses trägt, **dadurch gekennzeichnet, dass** dieses mit wenigstens einer Schiene (2) unabhängig von Kabelumlenkmitteln (4) ausgestattet ist, die an den Enden der Schiene (2) angeordnet sind, wobei die Kabelumlenkmittel (4) an dem Paneel (1) und die Schiene (2) an dem Paneel (1) mittels der in dem besagten Paneel (1) integrierten Vorsprünge befestigt sind.

2. Strukturelles Trägermodul für Fahrzeugtüren nach Anspruch 1, **dadurch gekennzeichnet, dass** das Paneel (1) Hubendanschläge (1.2) integriert, die von dem Boden der Schienen (2) hervortreten.

3. Strukturelles Trägermodul für Fahrzeugtüren nach Anspruch 1, **dadurch gekennzeichnet, dass** das Paneel (1) mindestens einen Anschlag (1.3) integriert, der das Kabel in den Kabelumlenkmitteln (4) zurückhält.

4. Strukturelles Trägermodul für Fahrzeugtüren nach Anspruch 1, **dadurch gekennzeichnet, dass** das Paneel (1) mindestens eine Führung (1.4) für die Lenkung eines ummantelten Kabels an dem Ausgang der Elemente integriert, an dem das Kabel umgelenkt wird.

5. Strukturelles Trägermodul für Fahrzeugtüren nach Anspruch 1, **dadurch gekennzeichnet, dass** die in dem Paneel (1) integrierten Vorsprünge (1.1) zur Befestigung der Schienen (2) längslaufend sind.

6. Strukturelles Trägermodul für Fahrzeugtüren nach Anspruch 1, **dadurch gekennzeichnet, dass** die in dem Paneel (1) integrierten Vorsprünge (1.1) zur Befestigung der Schienen (1) nur an den Befestigungsbereichen für die Schiene (2) verlängert sind.

7. Strukturelles Trägermodul für Fahrzeugtüren nach Anspruch 1, **dadurch gekennzeichnet, dass** die Schienen (2) über einen konstanten Querschnitt verfügen.

8. Strukturelles Trägermodul für Fahrzeugtüren nach Anspruch 1, **dadurch gekennzeichnet, dass** die Befestigung der Schienen (2) an dem Paneel (1) mittels Schellen, Schrauben oder Nieten erfolgen kann.

9. Strukturelles Trägermodul für Fahrzeugtüren nach Anspruch 1, **dadurch gekennzeichnet, dass** die Kabelumlenkmittel (4) an dem Paneel (1) bei in dem Paneel (1) integrierten drehkreuzförmigen Vorsprüngen (1.5) befestigt sind.

10. Strukturelles Trägermodul für Fahrzeugtüren nach Anspruch 1, **dadurch gekennzeichnet, dass** die Kabelumlenkmittel (4) an dem Paneel (1) mittels eines drehkreuzförmigen Teils befestigt sind, das außerhalb des Paneels (1) liegt und an dem besagten Paneel (1) befestigt ist.

11. Strukturelles Trägermodul für Fahrzeugtüren nach Anspruch 1, **dadurch gekennzeichnet, dass** das Paneel (1) Elemente zur Befestigung eines Türschlossträgers integriert.

12. Strukturelles Trägermodul für Fahrzeugtüren nach Anspruch 1, **dadurch gekennzeichnet, dass** das Paneel (1) selbst in dieses integriert das Gehäuse der Kabelaufwickeltrommel (8) zur Anhebung und Absenkung des Schiebers (3) des Fensterhebers einschließt, das seitens Wänden (1.7) konfiguriert ist, die aus dem Paneel (1) hervortreten, wobei der Gehäusehohlraum auf dessen beiden Grundflächen offen ist, worin die Grundfläche, welche gegenüber dem nassen oder inneren Bereich des Türkasten liegt, von einem Deckel (9) bedeckt ist.

13. Strukturelles Trägermodul für Fahrzeugtüren nach Anspruch 12, **dadurch gekennzeichnet, dass** das Paneel (1) an seiner zum nassen Bereich hin offenen Grundfläche mit einer Umfangsauflagefläche (1.9) der Aufwickeltrommel (8) ausgestattet ist.

14. Strukturelles Trägermodul für Fahrzeugtüren nach Anspruch 12, **dadurch gekennzeichnet, dass** die Wände (1.7), die aus dem Paneel (1) hervortreten, ein Fenster (1.6) für den Eingang und Ausgang der Kabel besitzen.

15. Strukturelles Trägermodul für Fahrzeugtüren nach Anspruch 14, **dadurch gekennzeichnet, dass** das Kabeleingangs- und Kabelausgangsfenster (1.6) aus einem Schlitz bestehen, der mit einem geklammerten Deckel (9) verschlossen ist.

16. Strukturelles Trägermodul für Fahrzeugtüren nach Anspruch 12, **dadurch gekennzeichnet, dass** der verzahnte Motor (10) mit einem wasserdichten Dichtring (10.1) ausgestattet ist, der gegen das Paneel (1) um den offenen Hohlraum des Gehäuses auf der Seite des nassen Bereichs herum festsitzt.

17. Strukturelles Trägermodul für Fahrzeugtüren nach Anspruch 12, **dadurch gekennzeichnet, dass** das Paneel mit einem wasserdichten Dichtring (10.1) ausgestattet ist, der gegen den verzahnten Motor und das Paneel (1) um den offenen Hohlraum des Gehäuses auf der Seite des nassen Bereichs herum festsitzt.

18. Strukturelles Trägermodul für Fahrzeugtüren nach Anspruch 12, **dadurch gekennzeichnet, dass** das Paneel (1) Drehkreuze (1.8) zur Verankerung des verzahnten Motors (10) an dem Paneel (1) auf dem trockenen Bereich besitzt.

## Revendications

1. Module structural de support pour portières de véhicules configuré par un panneau structural (1) avec des protubérances intégrées pour la fixation des rails (2) d'un mécanisme élévateur de fenêtres qu'il porte, **caractérisé en ce qu'**il est pourvu d'un rail (2) au moins indépendant des moyens de réorientation (4) du câble disposés aux extrémités du rail (2) où les moyens de réorientation (4) du câble sont fixés au panneau (1) et où le rail (2) est fixé au panneau (1) par les protubérances intégrées dans ledit panneau (1).

2. Module structural de support pour portières de véhicules selon la revendication 1, **caractérisé en ce que** le panneau (1) comporte des butées de fin de course (1.2) qui émergent de la base des rails (2).

3. Module structural de support pour portières de véhicules selon la revendication 1, **caractérisé en ce que** le panneau (1) comporte au moins une butée (1.3) qui retient le câble dans les moyens de réorientation (4) du câble.

4. Module structural de support pour portières de véhicules selon la revendication 1, **caractérisé en ce que** le panneau (1) comporte au moins un guide (1.4) pour réorienter un câble sous gaine à la sortie des éléments où le câble est réorienté.

5. Module structural de support pour portières de véhicules selon la revendication 1, **caractérisé en ce que** les protubérances (1.1) intégrées dans le panneau (1) pour fixer les rails (2) sont longitudinales.

6. Module structural de support pour portières de véhicules selon la revendication 1, **caractérisé en ce que** les protubérances (1.1) intégrées dans le panneau (1) pour fixer les rails (2) sont uniquement prolongées dans les zones de fixation pour le rail (2).

7. Module structural de support pour portières de véhicules selon la revendication 1, **caractérisé en ce que** les rails (2) ont une section transversale constante.

8. Module structural de support pour portières de véhicules selon la revendication 1, **caractérisé en ce que** la fixation des rails (2) au panneau (1) peut être réalisée au moyen de fixations à ressort, de vis ou de rivets.

9. Module structural de support pour portières de véhicules selon la revendication 1, **caractérisé en ce que** les moyens de réorientation (4) du câble sont fixés au panneau (1) sur des protubérances en forme de tourelles (1.5) intégrées dans le panneau (1).

10. Module structural de support pour portières de véhicules selon la revendication 1, **caractérisé en ce que** les moyens de réorientation (4) du câble sont fixés au panneau (1) par une pièce en forme de tourelle externe au panneau (1) et fixée audit panneau (1).

11. Module structural de support pour portières de véhicules selon la revendication 1, **caractérisé en ce que** le panneau (1) comporte des éléments pour la fixation d'un support de blocage.

12. Module structural de support pour portières de véhicules selon la revendication 1, **caractérisé en ce que** le panneau (1) lui-même comporte intégré à lui le logement du tambour d'enroulement (8) du câble pour élever et abaisser la glissière (3) de l'élévateur de fenêtre, configuré par des parois (1.7) qui émergent du panneau (1), la cavité du boîtier étant ouverte sur ses deux bases, dans lequel la base faisant face à la zone humide ou interne du coffre de la portière est recouverte par un couvercle (9).

13. Module structural de support pour portières de véhicules selon la revendication 12, **caractérisé en ce que** le panneau (1) est pourvu sur sa base qui est ouverte en direction de la zone humide d'une assise périphérique (1.9) du tambour d'enroulement (8).

14. Module structural de support pour portières de véhicules selon la revendication 12, **caractérisé en ce que** les parois (1.7) qui émergent du panneau (1) ont une fenêtre (1.6) pour l'entrée et la sortie des câbles.

15. Module structural de support pour portières de véhicules selon la revendication 14, **caractérisé en ce que** la fenêtre d'entrée et de sortie (1.6) du câble consiste en une fente qui est fermée par un couvercle avec fixation à ressort (9).

16. Module structural de support pour portières de véhicules selon la revendication 12, **caractérisé en ce que** le moteur à train d'engrenages (10) est pourvu d'un joint étanche (10.1) qui est piégé contre le panneau (1) autour de la cavité ouverte du boîtier sur le côté de la zone humide.

17. Module structural de support pour portières de véhicules selon la revendication 12, **caractérisé en ce que** le panneau est pourvu d'un joint étanche (10.1) qui est piégé entre le moteur à train d'engrenages et le panneau (1) autour de la cavité ouverte du boîtier sur le côté de la zone humide.

18. Module structural de support pour portières de véhicules selon la revendication 12, **caractérisé en ce que** le panneau (1) possède des tourelles (1.8) pour fixer le moteur à train d'engrenages (10) au panneau (1) sur la zone sèche.
